# EUROPÄISCHE PATENTSCHRIFT

(11) **EP 0 537 143 B1**
(45) Veröffentlichungstag und Bekanntmachung des Hinweises auf die Patenterteilung: **17.09.1997**
(21) Anmeldenummer: 90910100.8
(22) Anmeldetag: 04.07.1990
(51) Int. Cl.: C02F 1/52, C01B 17/22

(54) **ZUSAMMENSETZUNG UND VERFAHREN ZUM BEHANDELN VON METALLIONEN UND ORGANISCHE UND/ODER ANORGANISCHE VERUNREINIGUNGEN ENTHALTENDEM WASSER**
COMPOSITION AND PROCESS FOR TREATING WATER CONTAINING METAL IONS AND ORGANIC AND/OR INORGANIC IMPURITIES
PROCEDE ET COMPOSITION DE TRAITEMENT D'EAU CONTENANT DES IONS METALLIQUES ET DES IMPURETES ORGANIQUES ET/OU INORGANIQUES

(43) Veröffentlichungstag der Anmeldung: 21.04.1993
(73) Patentinhaber: Straten, Günter, D-52074 Aachen (DE)
(72) Erfinder: Straten, Günter, D-52074 Aachen (DE)
(74) Vertreter: Kurig, Thomas
(86) Internationale Anmeldenummer: DE9000499
(87) Internationale Veröffentlichungsnummer: WO9200917

(56) Entgegenhaltungen:
- EP-A- 0 349 671
- BE-A- 447 850
- US-A- 1 934 626
- CHEMICAL ABSTRACTS, Band 97, Nr. 18, 01 November 1982, Columbus, OH (US); R. KRAUSE et al., Seite 136, AN 147038e

## Beschreibung

Die Erfindung betrifft ein Verfahren zur Herstellung einer Zusammensetzung zum Behandeln von Metallionen und gegebenenfalls organische und/oder anorganische Verunreinigungen enthaltendem Wasser und deren Verwendung bei der Abtrennung von Schwer- und Buntmetallen und gelösten, suspendierten oder emulgierten organischen und/oder anorganischen Bestandteilen aus wäßrigen Systemen.

Schwer- und Buntmetalle finden als Bestandteile von Legierungen in Stählen und veredelnden oder korrosionshemmenden Auflagen in Verbindung mit Kunst- und Naturstoffen in allen Industriestaaten breite Anwendung. Die Technologien moderner industrieller Fertigung ergeben unter Verwendung von Metallen aus der Palette der Nebengruppenelemente und einiger Schwermetalle der dritten bis fünften Hauptgruppe des Periodensystems neben der nutzbringenden Anwendung zwangsläufig auch ein Abfallproblem.

Nach vorsichtiger Einschätzung fallen rund 5% der erzeugten oder eingesetzten metallischen Elemente in Produktions- oder Verarbeitungsprozessen wieder als Rest- bzw. als Abfallstoffe in reiner Form oder in Verbindungen an, die nach den bisher bekannten Methoden z.T. nicht wirtschaftlich einer Wiederverwertung zugeführt werden können. Neben den volkswirtschaftlichen Aspekten, die eine kostengünstige technologische Rückgewinnung und damit eine Verminderung des Kosten- und Devisenbedarfs für die Beschaffung von Rohstoffen, sowie eine derartige Streckung der Rohstoffressourcen wünschenswert erscheinen lassen, sind die umweltrelevanten Gesichtspunkte der Sondermüllverringerung der überwiegend für fast alle biologischen Spezies toxisch wirkenden Schwer- und Buntmetalle von Bedeutung.

Die Entfernung toxischer Schwer- und Buntmetalle aus Abwässern der metallverarbeitenden Industrie wird heute noch in erheblichem Ausmaß durch die klassische hydroxidische Fällung mit Natronlauge, Kalkmilch oder, in Sonderfällen, mit Natriumcarbonat vorgenommen. Aufgrund des weiten pH-Bereichs, in dem die Hydroxide und Oxyhydrate fallen, und aufgrund von Mischreaktionen, z.B. verschiedener zweiwertiger Metalle mit ähnlichen Ionenradien, muß hier jedoch in Vorversuchen für jede Metallionenmischung empirisch der optimale "Kompromiß"-pH-Wert ermittelt werden. Ferner können exakte reproduzierbare Voraussagen über den Fällungsprozeß nicht gemacht werden, da eine Vielzahl von Faktoren den Vorgang der Ausfällung beeinflußt und überlagert. Die hydroxidische Fällung von Schwer- und Buntmetallen weist prinzipiell vier weitere wesentliche Nachteile auf:
1. Die Löslichkeitsprodukte der Metallhydroxide sind um mindestens 7 bis 10 Zehnerpotenzen größer als die der entsprechenden Sulfide. Die Löslichkeit der Metallhydroxide ist also überschlägig, je nach Matrixverhältnissen der Lösungen, bis zum Wert des zehnmillionenfachen höher, als die der adäquaten Sulfide.
2. Der Neutralsalzeinfluß im Fällungsmedium, der zur Erhöhung der Löslichkeit führt, wirkt sich bei der hydroxidischen Fällung wesentlich stärker aus als bei der sulfidischen Fällung. Außerdem ist oft ein negativer Einfluß auf das Sedimentationsverhalten und die Filtrierbarkeit der Niederschläge zu beobachten.
3. Die hydroxidische Fällung einiger Schwer- und Buntmetalle ist bei Anwesenheit von Komplexbildnern gar nicht oder nur in unbefriedigendem Maße möglich.
4. Die nach dieser klassischen Methode ausgefällten Metallhydroxide sind nur unter Anwendung erschwerter und kostenaufwendiger Methoden wieder verwertbar. Daher werden in der Regel bis heute hydroxidische Schlämme aus der metallverarbeitenden Industrie unter hohen Kosten als Sonderabfall entsorgt.

Demgegenüber liegen die Löslichkeitsprodukte der meisten Metallsulfide so niedrig, daß die quantitative Fällung der Metallionen selbst aus stark komplexhaltigen Lösungen erfolgt. Dennoch wird die Sulfidfällung im Abwasserbereich nur selten praktiziert. Einmal ist die Anwendung des unangenehm riechenden, giftigen und brennbaren Schwefelwasserstoffs nicht unproblematisch und zum anderen weisen die meisten Metallsulfide eine unbefriedigende Abtrennbarkeit aus der wäßrigen Phase auf.

In der Praxis der Abwasserreinigung wurden in den letzten Jahren für Spezialgebiete verschiedene Organosulfide eingeführt. Die Organosulfide arbeiten nach dem gleichen Prinzip wie die Sulfide und fällen u.a. Kupfer, Cadmium, Quecksilber, Blei, Nickel, Zinn und Zink als Sulfide aus. Ihr Nachteil liegt allerdings darin, daß der zulässige pH-Wert auf Werte von über 7 beschränkt ist, da es im sauren Bereich zur Ausfällung der unwirksamen freien Säure kommt.

Nun sind aber gerade die Stabiltätskonstanten vieler Schwermetallkomplexe, speziell vom Typ der häufig verwendeten Polyaminocarbonsäuren, stark abhängig vom pH-Wert, und zwar so, daß bei höheren pH-Werten eine größere Stabilität gegeben ist als im sauren Bereich. Die Ausfällung komplexierter Metalle ist dann nur über ein kompliziertes Verfahren mittels Umkomplexierung durch Eisen-III-Ionen möglich.

Es können zwar bei vollständiger Abwesenheit von komplexierenden Stoffen und bei strikter Einhaltung der optimalen Betriebsbedingungen die neuen Grenzwerte der 40. Allgemeinen Verwaltungsvorschrift über Mindestanforderungen über das Einleiten von Abwasser in Gewässer gemäß §7a Wasserhaushaltsgesetz (WHG) mit der hydroxidischen Fällung gerade noch unterschritten werden, wenn zusätzlich eine Filtration des behandelten Abwassers nachträglich vorgenommen wird. Eine solche Betriebsweise ist technisch jedoch sehr aufwendig und bietet keine Garantie für eine ständige Einhaltung der gesetzlichen Vorgaben, weil der Sicherheitsabstand der erreichbaren Werte zu den Grenzwerten mit einem Faktor von ca. 1,5 bis 2 zu gering ist. Bereits kleinste Betriebsstörungen führen in solchen Fällen zur Überschreitung der zulässigen Werte.

Bei der Schwer- und Buntmetallfällung mit Polysulfiden werden anstelle des giftigen Schwefelwasserstoffs Alkali- oder Erdalkalipolysulfide eingesetzt. Der Nachteil bisher bekannter polysulfidischer Fällungsmittel liegt jedoch darin, daß diese in Wasser eine schlechte Löslichkeit aufweisen und daher zu einer Erhöhung des Stoffbedarfs und des apparativen Aufwands führen. Ferner ist ihre Wirkung auf die alleinige Ausfällung von Metallionen beschränkt, während in der Praxis darüber hinaus ein starkes Bedürfnis nach Zusammensetzungen zur gleichzeitigen Beseitigung z.B. von mineralölischen Verunreinigungen besteht.

Die Offenlegungsschrift EP-A-0 349 671 beschreibt ein Verfahren zur Abtrennung von Schwermetallen aus Abwässern, bei dem das verwendete Fällungsmittel derart ausgebildet ist, daß im behandelten Abwasser die sulfidischen und sonstigen Niederschläge bei einem pH von ca. 7,5 selbsttätig ausflocken. Das Fällungsmittel besteht aus Erdalkalipolysulfiden oder Gemischen aus Erdalkalipolysulfiden mit anderen Erdalkali-Schwefel-Verbindungen.

In der DDR-Patentschrift 0 154 008 ist ein Verfahren zur Herstellung von Alkalipolysulfiden beschrieben, und zwar durch Umsetzung von wäßrigen Alkalihydroxidlösungen mit Schwefel. Bei der Umsetzung von wäßrigen Alkalihydroxidlösungen mit Schwefelpolysulfid wird die unerwünschte Nebenreaktion der Schwefelwasserstoffbildung vollständig bzw. nahezu vollständig vermieden, wenn pro Mol Alkalihydroxid nicht mehr als 1,5 Mol Schwefel eingesetzt werden, und wenn bei der Umsetzung bestimmte Temperaturen, z.B. 10 °C unter dem Siedepunkt der Reaktionslösung, eingehalten werden.

Aufgabe der Erfindung ist daher die Herstellung einer Zusammensetzung zum Behandeln von verunreinigtem Wasser, die eine sehr hohe Wasserlöslichkeit aufweist, komplexierte und nicht komplexierte Metallionen und gegebenenfalls organische oder anorganische Verunreinigungen bei hervorragender Abtrennbarkeit der Niederschläge ausfällt, über einen sehr weiten pH-Bereich verwendbar ist, die Emission von Schwefelwasserstoff unterdrückt und darüber hinaus sehr kostengünstig herzustellen ist.

Erfindungsgemäß wird diese Aufgabe gelöst durch die Merkmale von Patentanspruche 1. Vorteilhafte Ausgestaltungen sind gegenstand der Unteransprüche. Die Verwendung der erfindungsgemäß hergestellten Zusammensetzung ist Gegenstand des Anspruchs 4.

Bei erfindungsgemäßer Verwendung der Zusammensetzung kann mühelos 1/10 der neuen Grenzwerte der bereits angeführten 40. Allgemeinen Verwaltungsvorschrift über Mindestanforderungen über das Einleiten von Abwasser in Gewässer gemäß § 7a Wasserhaushaltsgesetzt (WHG) erreicht werden. Auch kleinere Betriebsstörungen der Behandlungsanlagen führen dann zu keiner Grenzwertüberschreitung.

Der Herstellung der Zusammensetzungen liegt der Gedanke zugrunde, elementaren Schwefel auf chemischem Wege, nämlich durch Reaktion mit Alkalilaugen, zu einer Disproportionierungsreaktion zu bringen. Ferner steht im Vordergrund, eine möglichst große Menge Schwefel in Lösung zu bringen und, wie nachfolgend beschrieben, zu aktivieren.

Es wurde gefunden, daß man bei der Umsetzung von Schwefel mit einem Alkalihydroxid in Gegenwart von Wasser eine Zusammensetzung erhält, die eine sehr hohe Wasserlöslichkeit aufweist, komplexierte und nichtkomplexierte Metallionen und gegebenenfalls organische oder anorganische Verunreinigungen bei hervorragender Abtrennbarkeit der Niederschläge ausfällt, über einen weiten pH-Bereich verwendbar ist, die Emission von Schwefelwasserstoff unterdrückt und darüber hinaus sehr kostengünstig herzustellen ist.

Die erfindungsgemäß hergestellte Zusammensetzung entspricht in ihrer Zusammensetzung der allgemeinen Formel I

xM yS zO (I)

worin
M Alkali ist,
x 2 bzw. 1 ist, und
y im Bereich von 1,5 bis 5,0 und
z im Bereich von 0,1 bis 2,5 liegen.

Bevorzugt steht M für ein Alkalimetall, besonders bevorzugt für Natrium oder Kalium, insbesondere für Natrium, wobei x den Wert 2 hat und y im Bereich von 2,0 bis 5,0, vorzugsweise 3,0 bis 4,0, insbesondere 3,5 bis 3,7 und z im Bereich von 0,1 bis 2,5, vorzugsweise von 0,3 bis 1,5, insbesondere von 0,5 bis 1,0 liegen.

Die massenspektrometrische Analyse mittels HPLC-MS-MS (Thermospray-Doppelmassenspektrometrie) einer derartigen Zusammensetzung zeigt, daß diese reduzierte und oxidierte Schwefelverbindungen umfaßt. Sie enthält beispielsweise Polysulfidanteile sowie Polysulfanmono-, -di-,-trisulfonate und Schwefel, der als elementarer, gelöster Schwefel vorliegen kann.

Bevorzugt enthält die erfindungsgemäß hergestellte Zusammensetzung ein Aluminiumsalz. Aluminium hat einen amphoteren Charakter, der zu einem. unterschiedlichen Verhalten in alkalischen bzw. sauren Medien führt. Bei Zusatz eines Aluminiumsalzes zu der Zusammensetzung bilden sich im alkalischen Medium Aluminate, wobei in sauren Medien Al³⁺-Ionen auftreten. Die zugesetzten Aluminiumsalze bilden in neutral und schwach alkalischen Abwässern bis pH 8,8 großvolumige stark adsorptiv wirkende Hydroxide, die u.a. den gegebenenfalls noch kolloidal vorliegenden Schwefel des Abwasssers mitfällen. Das mit zunehmender Neutralisierung (pH 7) gebildete ausfallende Hydroxid nimmt mit seiner großen Oberfläche den möglicherweise noch kolloidal gelösten Schwefel mit und setzt sich mit diesem zusammen ab. Dieser Effekt kehrt sich in stark alkalischen Medien (pH 9) wieder um, da die Al-Ionen dann wieder in Lösung gehen. Bevorzugte Aluminiumsalze sind Aluminiumsulfat, Aluminiumchlorid, besonders bevorzugt ist Aluminiumsulfat. Dieser Nachfällungseffekt in schwach alkalischen Abwässern ist hervorragend geeignet zur Beseitigung des sog. Schwefel-Kolloidalschleiers, der häufig nach einer Abwasserbehandlung übrigbleibt.

Die Zusammensetzung enthält bevorzugt 10 bis 30g, besonders bevorzugt 15 bis 25g, und insbesondere 18 bis 22g Aluminiumsulfat in 11 Zusammensetzung.

Außerdem setzt man bei dem erfindungsgemäßen Verfahren ein Thiosulfat zu. Diese Substanz erhöht den O₂-Anteil bzw. den SO₂-Anteil der Zusammensetzung und verstärken somit die Wackenroder'sche Abfangreaktion durch direkte Bildung von Polythionsäuren (Wackenroder'sche Flüssigkeit) und Polysulfanoxide (Wackenroder'scher Schwefel) aus SO₂ und H₂S.

Bei der Herstellung der beanspruchten Zusammensetzung setzt man Wasser, Schwefel und Alkalihydroxid im Mol-Verhältnis von 5,4 bis 5,6:1,7 bis 1,9:1 und insbesondere von 5,6:1,8:1 miteinander um. Dabei ist es von untergeordneter Bedeutung, in welcher Reihenfolge die Reaktionspartner zugesetzt werden. In einer besonders bevorzugten Ausführungsform der Erfindung wird jedoch zunächst zur Gewährleistung einer guten Oberflächenbenetzung mit Wasser Schwefel unter Rühren in Wasser aufgeschlämmt und anschließend das Alkalihydroxid zugesetzt. Der Zusatz des Alkalihydroxids erfolgt ebenfalls unter intensivem Weiterrühren.

Im Verlauf von 2 bis 10 Minuten nach der Alkalihydroxidzugabe wird durch die exotherme Hydratisierung des zugesetzten Hydroxids die zur Reaktion mit dem Schwefel erforderliche Initialtemperatur von etwa 62°C erreicht. Danach löst sich unter weiterem Temperaturanstieg der Schwefelschlamm langsam auf. Dieser Vorgang dauert, je nach Ansatzmenge und Behälterform, 5 bis 40 Minuten. Im allgemeinen stellt sich nach vollständiger Schwefelauf-Lösung eine Grenztemperatur in der Lösung von 98 bis 104°C, je nach Abstrahlung des Behälters, ein. Nach Abschluß der Reaktion liegt die Zusammensetzung in Form einer tiefroten Flüssigkeit vor, die nach einer Abkühlzeit unter Weiterrühren nahezu geruchlos ist. Diese Lösung umfaßt Polysulfidanteile, Polysulfanmonosulfonate, Polysulfandisulfonate und elemetaren gelösten Schwefel. Die Schwefelgruppierungsverteilung der erhaltenen Lösungen ist z.B. wie folgt:
1. Polysulfidanteile:

   17-21% S₂²⁻, 4-8% S₃²⁻, 15-21 S₄²⁻,

   3-7% S₅²⁻, 12-18% S₆²⁻, 10-14 S₈²⁻
2. Polysulfanmonosulfonate in % Schwefel:

   11-16% S₂O₃²⁻ 6-10% S₄O₃²⁻
3. Polysulfandisulfonate in % Schwefel:

   1-5% S₄O₆²⁻
4. Elementarer gelöster Schwefel:

   0-3% S₆- und S₈- Ringschswefel

Die so erhaltenen Lösungen weisen z.B. die folgenden Eigenschaften auf:

| | |
|---|---|
| Dichte bei 20°C | 1,10 - 1,60 g/cm³ |
| Dampfdruck bei 20°C | 15,5 - 17,0 mbar |
| Viskosität bei 20°C | 6,30 - 7,20 mm²/s |
| n. DIN 51562 | 9,0 -10,5 in Pa.s |
| Siedepunkt bei 1013 mbar | 105 - 111°C |
| Kristallisationspunkt | - 19,5° bis - 23°C |
| Löslichkeit in Wasser | unbegrenzt |
| pH-Wert (10g/l) | 10,0 - 14,0 |

Ferner ist es von besonderem Vorteil, wenn der Schwefel einen Zusatz zur Verhinderung von Verbackungen und Verkapselungen enthält, wie z.B. einen Kieselsäurezusatz.

Eine gleichmäßige und schnelle Verteilung der Zusammensetzung im Fällungsrezipienten ist bei großtechnischen Fällanlagen ein wesentlicher Faktor für die Wirksamkeit. Gegebenenfalls kann daher die erhaltene Zusammensetzung z.B. durch Zusatz einer bestimmten Wassermenge nachverdünnt werden. Die auf diese Weise entstehende Lösung ist deutlich weniger viskos und daher leichter im Fällungsrezipienten zu verteilen als das Konzentrat.

Die Eigenschaften einer mit der zweifachen Wassermenge nachverdünnten Na-Polysulfid-Zusammensetzung sind z.B. wie folgt:

Form: Flüssigkeit Farbe: rot-orange Geruch: geruchlos

| | |
|---|---|
| Dichte bei 20°C | 1,165 g/cm³ |
| Dampfdruck bei 20°C | 21,7 mbar |
| Viskosität bei 20°C | 1,51 mm²/s |
| n. DIN 51 562 | = 1,76 cP |
| Siedepunkt bei 1013 mbar | 102,2 °C |
| Kristallisationspunkt | -7,4°C |
| Löslichkeit in Wasser | unbegrenzt |
| pH-Wert (10g/l) | 12,3 |

Das nachverdünnte Produkt enthält je Kg 14,57% Schwefel = 4,54 mol/Kg, davon 75% in polysulfidischer Form.

Dies entspricht 10,93% oder 109,3 g/Kg bzw. 3,41 mol/Kg polysulfidisch aktivierten Schwefels.

Untersuchungen der reinen matrixfreien Metallsalzlösungen von Schwer- und Buntmetallen haben bei zweiwertigen Metallionen für einen optimalen Fälleffekt einen äquimolaren Bedarf des in der Zusammensetzung enthaltenen Schwefels ergeben. Dies zeigt, daß der gesamte eingesetzte Schwefel bei der Herstellung der Zusammensetzung auch aktiviert wurde.

Grundsätzlich kann die Zusammensetzung als "flüssig komprimierter" Schwefelwasserstoffersatz angesehen werden, der die Vorteile desselben beinhaltet, ohne die Nachteile des Schwefelwasserstoffs in Kauf nehmen zu müssen. In der Fällwirkung entspricht 1 kg der mit der zweifachen Wassermenge des konzentrierten Ansatzes nachverdünnten Zusammensetzung theoretisch 102 l Schwefelwasserstoff. Aufgrund der schlechten Eintragsrate des H₂S-Gases in wäßrige Systeme werden nur etwa 15% des Eintrages in der Flüssigkeit gelöst, die dann zur Fällung genutzt werden können. Im Gegensatz dazu ist der aktivierte Schwefel der Zusammensetzung nahezu zu 100% in dem Fällungsrezipienten nutzbar. In der Anwendung entspricht daher hinsichtlich der Nutzwirkung 1 kg der mit der zweifachen Wassermenge des konzentrierten Ansatzes nachverdünnten Zusammensetzung in etwa 600 l H₂S. Anhand dieser Zahlen ist eindrucksvoll erkennbar, welche Vorteile die Verwendung des erfindungsgemäß hergestellten Fällmittels gegenüber einer Verwendung von Schwefelwasserstoff aufweist.

Den in der Zusammensetzung enthaltenen Polysulfonaten, insbesondere dem Monosulfonat (S₂O₃²⁻) kommt eine zusätzliche Bedeutung zu. Denn über die Wackenroder'sche Abfangreaktion kann es Überschüsse an freiem Schwefelwasserstoff, welcher in saurer Lösung entsteht, direkt in der Lösung chemisch binden. Dadurch wird der Austrag des unangenehm riechenden und toxischen Schwefelwasserstoffs weitgehend unterbunden. In diesem Zusammenhang wird nochmals auf die angegebenen Mol-Verhältnisse für Schwefel, Wasser und Alkalihydroxid hingewiesen, denn diese bestimmen die Disproportionierungsreaktion des Schwefels und beeinflußt daher unmittelbar das Verhältnis von reduzierten zu oxidierten Schwefelverbindungen und damit die Monosulfonatkonzentration in der beanspruchten Zusammensetzung.

Erfindungsgemäß kann die Zusammensetzung zum Behandeln von Metallionen und gegebenenfalls zusätzlich organische und/oder anorganische Verbindungen enthaltendem Wasser verwendet werden. Zu diesem Zweck gibt man die Zusammensetzung und gegebenenfalls eine ein mehrwertiges Kation enthaltende anorganische Verbindung zu einem zu reinigenden, lösliche Metallionen und gegebenenfalls organische und/oder anorganische Verunreinigungen enthaltenden Wasser, wobei der pH auf Werte im Bereich von 2 bis 12 eingestellt wird.

Das Verhältnis von erfindungsgemäß hergestellte Zusammensetzung zu Abwasser ist so eingestellt, daß ein äquimolares Verhältnis zwischen aktiviertem Schwefel und auszufällenden Metallionen besteht. Ein günstiges praktisches Verhältnis von erfindungsgemäßer Zusammensetzung zu Abwasser, beträgt 1/1000 l. Volumen.

Nach einer besonders bevorzugten Ausführungsform wird der pH-Wert des zu reinigenden Wassers vor einer Behandlung mit der Zusammensetzung auf einen Wert von 2,5 bis 5,5, vorzugsweise 3 bis 3,5 eingestellt. Ein pH-Wert unter 3,0 ist nicht besonders vorteilhaft, da bei Zugabe der Zusammensetzung, insbesondere bei Umwälzung mit Luftlanzen, eine Ausgasung größerer Schwefelwasserstoffmengen auftritt.

Das zu reinigende Abwasser sollte bei der Verwendung offener Behandlungsanlagen keine leicht freisetztbaren Cyanide enthalten, da sonst hochgiftige Blausäure freigesetzt wird. In diesen Fällen muß eine Cyanidentgiftung vorgeschaltet werden.

Die Zusammensetzung kann beispielsweise in einem pH-fraktionierten Stufenfällverfahren verwendet werden. Diese Art der Verwendung ist besonders geeignet zur Trennung saurer und neutral- bzw. alkalisch fällbarer Sulfide, wenn eine nachfolgende Aufarbeitung der Metalle auf dem Weg des Recyclings vorgesehen ist. Insbesondere in einigen Bereichen der Galvanikindustrie kann sie z.B. für die Vortrennung von Kupfer- und Nickelsulfiden sinnvoll sein. U.a. können so die wertvollen Metalle aus erschöpften Vernickelungsbädern zurückgewonnen werden.

Weitere Vorteile, Merkmale und Anwendungsmöglichkeiten der vorliegenden Erfindung ergeben sich aus der nachfolgenden Beschreibung von Ausführungsbeispielen in Verbindung mit der Zeichnung.
- Fig. 1: zeigt die Verwendung der erfindungsgemäß hergestellten Zusammensetzung in einem pH-fraktionierten Stufenfällverfahren.
- Fig. 2: zeigt die Verwendung der erfindungsgemäß hergestellten Zusammensetzung in einem Simultanfällverfahren.
- Fig. 3: zeigt die Verwendung der erfindungsgemäß hergestellten Zusammensetzung in einem Kollektorfällverfahren.

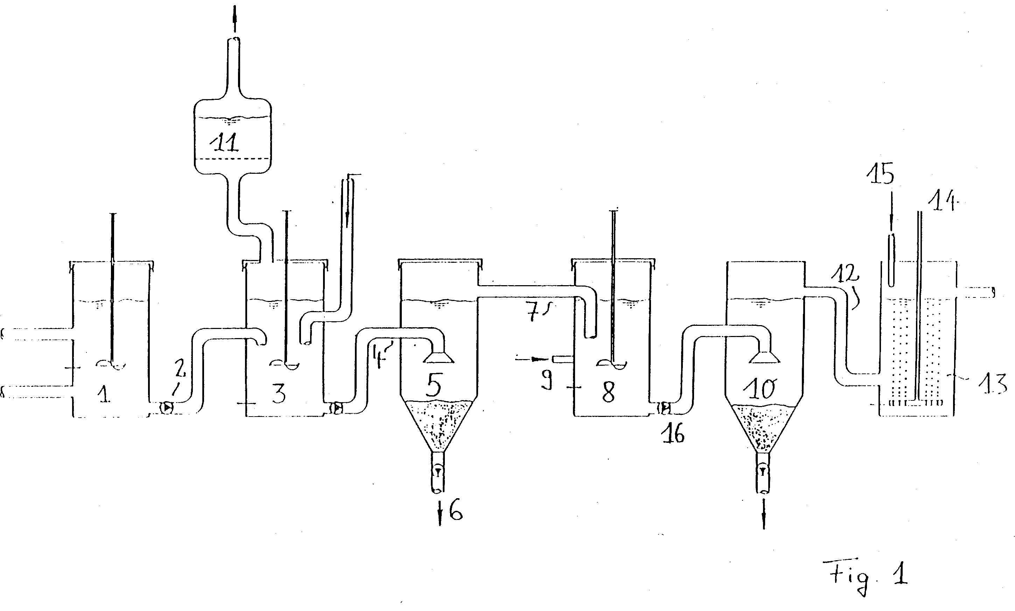

Im nachfolgenden wird unter Bezugnahme auf Fig. 1 die Verwendung der Zusammensetzung in einem pH-fraktionierten Stufenfällverfahren erläutert.

In einem Säuerungsbecken 1 wird z.B. mit einer Mineralsäure, vorzugsweise Salzsäure, das zu reinigende Abwasser auf einen pH-Wert im Bereich von 2 bis 5, vorzugsweise von 2,5 bis 4, insbesondere von 2,8 bis 3,3 eingestellt. Danach wird die den vorstehenden Ausführungen entsprechende Menge der erfindungsgemäß hergestellten Zusammensetzung, evtl. nach vorheriger Verdünnung, unter Rühren zugegeben. Die Mischung wird dann durch eine Rohrleitung 2 in ein saures Fällungsbecken 3 überführt, in dem man für die Dauer der Reaktion rührt. Durch eine Rohrleitung 4 überführt man die Lösung dann in ein saures Absetzbecken 5. Entsprechend den in dem Abwasser enthaltenen Metallionen ist eine weiße, graue oder schwarze Ausfällung zu beobachten mit einem milchigen, zunächst kolloidalen Anteil, der auf elementaren Schwefel zurückzuführen ist. Während die Niederschläge der sauren Fällung durch eine Rohrleitung 6 abgeführt werden, leitet man das überstehende Dekantat durch eine Rohrleitung 7 in ein mit einem Rührer versehenes Neutralisationsbecken 8. Hier wird der pH-Wert unter Zugabe z.B. von Natronlauge aus Leitung 9 auf Werte im Bereich von 3,5 und 4,5, vorzugsweise von 3,8 bis 4,2 eingstellt und nach einer Reaktionszeit von ca. 5 bis 20 Minuten trennt man die gegebenenfalls entstandenen sauren Niederschläge in einem in Fig. 1 nicht dargestellten nachgeschalteten Zwischenklärbecken ab. Danach wird das Dekantat unter Zugabe von weiterer Natronlauge und gegebenenfalls eines Fällungshilfsmittels, z.B. eines Polyelektrolyten, je nach enthaltenen Metallionen auf pH-Werte im Bereich von 6 bis 12, vorzugsweise von 7 bis 10, besonders bevorzugt von 7,8 bis 9,6, eingestellt. Über eine Rohrleitung 16 erfolgt dann die Überleitung der Mischung in ein alkalisches Absetzbecken 10, in dem nach einer Reaktionszeit von 5 bis 20 Minuten der im alkalischen fällbare Metallsulfidniederschlag abgetrennt wird.

Bei sehr hohem Bedarf an Zusammensetzung sollte im Einzelfall ein Voreinstellung des pH-Werts im zu reinigenden Abwasser im Säuerungsbecken 1 auf Werte im Bereich von 2,0 bis 3,5, vorzugsweise 2,3 bis 2,8, erfolgen.

In geschlossenen Räumen sollen die sauren Reaktionsbecken wegen einer geringen Emission an H₂S abgedeckt werden, und die Abluft kann in einer alkalisch oxidativen Abluftreinigungsvorrichtung 11 behandelt werden. Die H₂S-Emissionen blieben bei allen Fällversuchen ausnahmslos unter den MAK-Werten von 10 ppm in der Abluft.

Je nach Bedarf an Fällmittelüberschuß kann die gereinigte Wasserphase einer oxidativen Nachbehandlung unterzogen werden, um Reste an reduziertem Schwefel durch Oxidation zu eleminieren und so die Sulfidgrenzwerte vor Abgabe des gereinigten Wasser in Kanäle oder Vorfluter einzuhalten. Zu diesem Zweck wird das Dekantat eines alkalischen Absetzbeckens 10 durch eine Rohrleitung 12 in einen Behälter für die oxidative Nachbehandlung 13 überführt, in dem die Vorrichtung 14 z.B. eine Sauerstofflanze darstellt und in der z.B. durch Zugabe einer Mineralsäure, vorzugsweise Salzsäure durch die Zuleitung 15 auch eine pH-Einstellung des gereinigten Wassers auf Werte im Bereich von 6,5 bis 8,0 erfolgt.

Erfindungsgemäß kann die Zusammensetzung ferner zum Behandeln von Metallionen und gegebenenfalls zusätzlich organische und/oder anorganische Verbindungen enthaltendem Wasser in einem Simultanfällverfahren verwendet werden. Die Verwendung der beanspruchten Zusammensetzung in einem solchen Fällverfahren ist dann angebracht, wenn die im zu reinigenden Abwasser vorliegenden Metallmengen gering sind, also eine pH-fraktionierte Stufenfällung mit Recycling nicht sinnvoll ist, bzw. die enthaltenen Metallionen alle im gleichen pH-Bereich ausfallen.

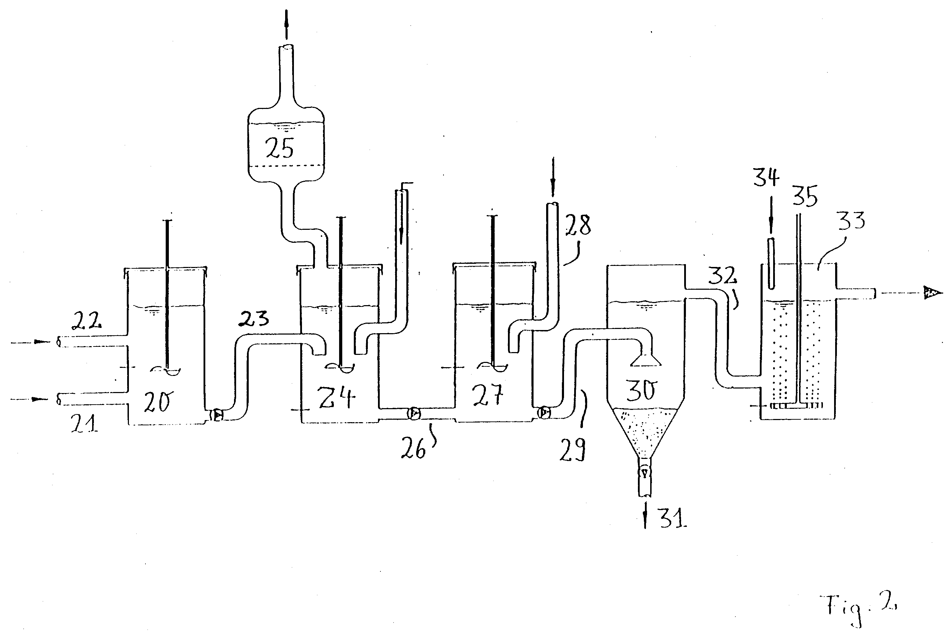

Die Beschreibung der erfindungsgemäßen Verwendung der Zusammensetzung in einem Simultanfällverfahren erfolgt anhand Fig. 2. Wie beim Stufenverfahren wird in einem Säuerungsbecken 20 durch Zugabe z.B. einer Mineralsäure, vorzugsweise Salzsäure aus einer Zuleitung 21 der pH-Wert des Fällmediums auf Werte im Bereich von 2,5 bis 5,5, vorzugsweise von 2,8 bis 3,3, eingestellt. Danach wird aus einer Zuleitung 22 die den vorhergehenden Ausführungen entsprechende Menge an Zusammensetzung unter Rühren in ein Säuerungsbecken 20 gegeben. Durch eine Rohrleitung 23 wird die Mischung anschließend in ein saures Fällungsbecken 24 geleitet und für 5 bis 30 Minuten gerührt.

Die Abluft des sauren Fällungsbeckens 24 kann auch hier mittels einer alkalisch-oxidativen Abluftreinigungsvorrichtung 25 von H₂S-Emissionen befreit werden.

Im Anschluß daran wird die Mischung durch eine Rohrleitung 26 in das Neutralisationsbecken 27 überführt. Durch Zugabe z.B. einer Lauge aus Zuleitung 28 wird der pH-Wert des Fällmediums langsam auf Werte von 6 bis 12, vorzugsweise 7,5 bis 11,5 angehoben.

Dabei fallen bis pH 8,3 die im neutralen und schwach alkalischen Milieu fallenden Metallsulfide weitgehend aus. Bei pH 8,3 ist außerdem der Optimumspunkt für die Ausfällung des schwerlöslichen Chrom-III-Hydroxids erreicht. Sind Nickel- und Zinkionen zugegen, wird der pH-Endwert vorzugsweise auf Werte im Bereich von 8,0 bis 11,5, vorzugsweise 9,0 bis 11,0, insbesondere von 9,5 bis 9,7 eingestellt. Dabei ist ein pH-Wert von 8,0 bis 11, vorzugsweise 9 bis 10, insbesondere 9,6 der empirisch ermittelte Optimumsbereich bzw. -punkt für die gleichzeitig minimierte Restlöslichkeit der beiden Metallsulfide. Bei einer Einstellung des pH-Endpunktes auf 9,6 sind die im Wasser gelösten Restgehalte an Nickel und Zink gleichermaßen unter 0,1 mg/l.

Nach dem Laugenzusatz wird die Mischung durch eine Rohrleitung 29 in ein Absetzbecken 30 überführt, aus dem durch Rohrleitung 31 die ausgefallenen Niederschläge entfernt werden, während das gereinigte Dekantat durch eine Rohrleitung 32 gegebenenfalls einem Behälter für die oxidative Nachbehandlung 33 zugeführt wird. Aus Zuleitung 34 kann wie beim Stufenfällverfahren eine Mineralsäurenzugabe unter Einstellung eines pH-Wertes im Bereich z.B. von 6,5 bis 8,0 erfolgen. Eine Vorrichtung 35 in dem Behälter für die oxidative Nachbehandlung 33 ist z.B. eine Sauerstofflanze.

Bei der Verwendung der Zusammensetzung in dem soeben dargestellten Simultanfällverfahren ist die Matrixbeschaffenheit des verunreinigten Wasserkörpers hinsichtlich komplexierender und die Fällung erschwerenden Bestandteile zu berücksichtigen.

Sollen die Metallsulfidschlämme nicht zur Wiederverwertung aufgearbeitet werden, so ist eine Neutralisation im Neutralisationsbecken 27 mit einer Suspension von Calciumhydroxid in Kalkwasser (Kalkmilch) zur Verbesserung des Absetzverhaltens und der Entwässerbarkeit der Niederschläge, z.B. mit Kammerfilterpressen, besonders bevorzugt und z.B. einer Natronlaugenneutralisation vorzuziehen.

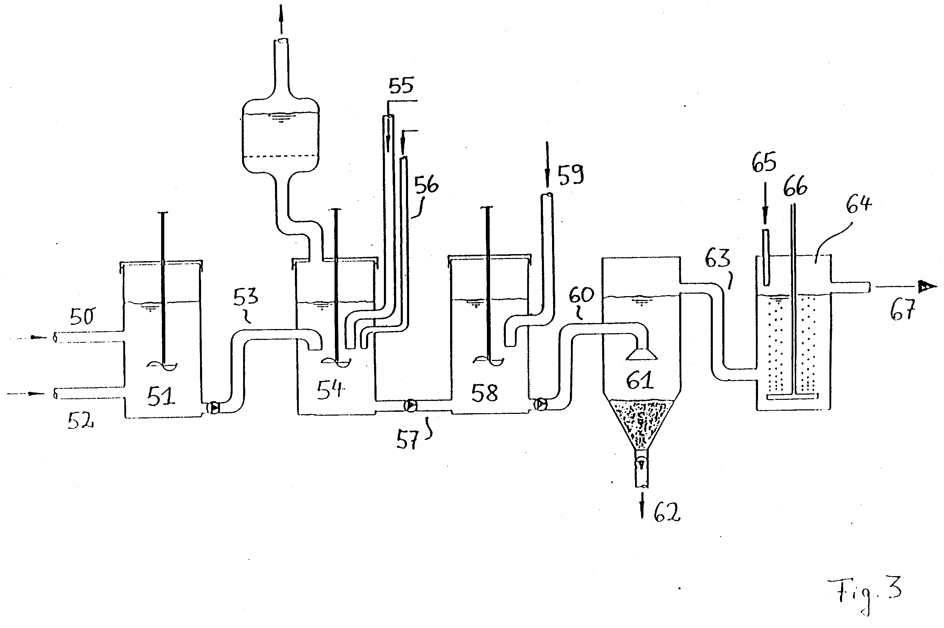

Erfindungsgemäß kann die Zusammensetzung nicht nur in einem Stufen- und Simultanfällverfahren, sondern auch in einem sogenannten Kollektorfällverfahren zum Behandeln von Metallionen und gegebenenfalls zusätzlich organische und/oder anorganische Verbindungen enthaltendem Wasser verwendet werden. Dabei handelt es sich bei dieser erfindungsgemäßen Verwendung der beanspruchten Zusammensetzung um eine Modifizierung des zuvor dargestellten Simultanfällverfahrens insbesondere für wässrige Phasen mit Gehalten an Metallionen und Komplexbildnern, aber vor allem an organischen und/oder anorganischen Verunreinigungen wie Mineralölen, Paraffinen, Emulgatoren, sowie ionischen und nichtionischen Tensiden. Ist das zu reinigende Abwasser lediglich mit Metallionen belastet, so führt auch in diesem Fall das im nachfolgenden unter Bezugnahme auf Fig. 3 beschriebene Kollektorfällverfahren zu überragenden Reinigungseffekten. Dieses Verfahren kann demnach auf alle Wässer angewendet werden. Dabei werden die im Stufen- und Simultanfällverfahren erhaltenen Fällergebnisse noch einmal deutlich verbessert. Ferner ist die Prozeßstabilität außerordentlich hoch. Es wurde bisher kein einziger Wert außerhalb der gesetzten Toleranzen von maximal 0,1 mg/l, bei Cadmium 0,01 mg/l, ermittelt.

Neben der hohen Prozeßsicherheit bei der Eliminierung der fällbaren Metalle wurde bei mineralölisch verunreinigten Wässern und Wässern mit Ölemulgatoren auf Tensidbasis eine Abtrennung der Verunreinigungen von über 99,5% ermittelt. Die Ölrestgehalte in der wässrigen Phase lagen hierbei ausnahmslos unter 10 mg/l, den neuen Grenzwerten des Entwurfs der 40. Abwasser V_{w}V vom 20. Juli 1988.

Durch eine Zuleitung 50 wird in ein Säuerungsbecken 51 der zu reinigende Wasserkörper eingefüllt und durch Zugabe z.B. einer Mineralsäure, vorzugsweise Salzsäure, durch Zuleitung 52 unter Rühren auf einen pH Wert im Bereich von 2-5, vorzugsweise von 2,5 bis 3,5 insbesondere von 2,9 bis 3,2 eingestellt. Anschließend leitet man durch Rohrleitung 53 das zu reinigende saure Abwasser in ein saures Fällungsbecken 54, um dort zunächst eine ein mehrwertiges Kation enthaltende anorganische Verbindung aus Zuleitung 55 zuzusetzen. Bei der ein mehrwertiges Kation enthaltenden Verbindung handelt es sich um eine Kalzium-, Aluminium- oder Eisenverbindung. Vorzugsweise wird eine Eisenverbindung, insbesondere Eisen-II-sulfat zugefügt. In einer besonders bevorzugten Ausführungsform wird eine schwache schwefelsaure Eisensulfatlösung mit einer Konzentration von 1/3 Mol Fe²⁺/l (ca. 18,5 g/l) verwendet. Es können jedoch auch Eisen-III-salze verwendet werden. Nach der Zugabe der ein mehrwertiges Kation enthaltenden anorganischen Verbindung wird die Zusammensetzung aus Zuleitung 56 zugegeben, wobei aufgrund der Eisenzugabe 1 bis 5, vorzugsweise 2 bis 4, insbesondere 2 Mol der beanspruchten Zusammensetzung pro m³ zureinigendem Abwasser mehr als bei den Simultanfällverfahren eingesetzt werden.

Die Zugabe der ein mehrwertiges Kation enthaltenden Verbindung kann vor oder nach, vorzugsweise jedoch vor Zugabe der Zusammensetzung erfolgen.

Anschließend überführt man durch eine Rohrleitung 57 die Mischung in ein Neutralisationsbecken 58 um dort nach einer Reaktionszeit von 5 bis 30 Minuten aus einer Zuleitung 59 eine Lauge, vorzugsweise z.B. Natronlauge oder Kalmilch, zuzufügen. Kalkmilch wird insbesondere dann verwendet, wenn kein Recycling der Schlämme vorgesehen ist, da mit Kalkmilch eine bessere Entwässerbarkeit des Schlammes erreicht wird.

Während der Neutralisation wird ein pH-Wert im Bereich von 8,0 bis 11,0, vorzugsweise von 9,0 bis 10, insbesondere von 9,5 bis 9,7 eingestellt. Diesen optimalen pH-Mittelwertsbereich von 9,0 bis 10,5 gilt es vorzugsweise bei der gleichzeitigen Ausscheidung von Nickel- und Zinksulfid einzustellen.

Ab einem pH-Wert im Bereich von 5,0 bis 6,0 werden die zugesetzten Eisenionen in Form von schwarzem Eisensulfid ausgefällt, wobei andere Metallsulfide, sowie organische und/oder anorganische Verunreinigungen mitgefällt werden.

Über eine Rohrleitung 60 leitet man die alkalische Mischung in ein Absetzbecken 61 und entnimmt dort gegebenenfalls den abgesetzten Sulfidschlamm durch eine Rohrleitung 62, während das Dekantat über eine Rohrleitung 63 einem Behälter64z.B. für eine oxidative Nachbehandlung zugeführt wird. Über eine Zuleitung 65 wird gegebenenfalls z.B. eine Mineralsäure, vorzugsweise Salzsäure, zugesetzt und dadurch eine pH-Wert-Einstellung des gereinigten Abwasserkörpers im Bereich von z.B. 6,5 bis 8,0 erreicht. Eine Vorrichtung 66 dient zur oxidativen Nachbehandlung und stellt z.B, eine Sauerstofflanze dar. Das gereinigte Wasser verläßt über die Abflußleitung 67 die Kollektorfällungsvorrichtung.

Die in Verbindung mit der Zusammensetzung verwendete, ein mehrwertiges Kation enthaltende anorganische Verbindung, vorzugsweise eine Eisenverbindung, insbesondere Eisen-II-sulfat, bzw. die darin enthaltenen Metallionen wirken katalytisch fällungsbeschleunigend im neutralen und alkalischen Bereich und fällen außerdem verstärkt die organischen und/oder anorganischen Verunreinigungen adsorptiv mit aus dem Wasserkörper. Gleichzeitig werden die im sauren Medium im Überscbuß vorliegenden polysulfidischen Anteile der Zusammensetzung im Neutralbereich durch die Eisensulfidfällung in der wässrigen Phase verringert, wodurch der Rücklösungseffekt von sauer gefällten Schwer- und Buntmetallsulfiden gering gehalten wird.

Die durch Kombination der Zusammensetzung und der zugesetzten mehrwertigen Kationen herbeigeführte katalytische Kollektorwirkung ist auf folgende 6 Gründe zurückzuführen:
1) Die in größerer Menge ausfallenden Sulfide schleppen andere Sulfide und gegebenenfalls Verunreinigungen mit (Mitschleppungs- oder Huckepackeffekt).
2) Es werden Übersättigungserscheinungen ausgelöst.
3) Es kommt zur Mischkristallbildung, wie sie z.B. bei Quecksilber- und Kadmiumsulfiden (HgS/CdS) bekannt ist.
4) Auch die kovalente Verbindungsbildung von Sulfiden, die beispielsweise für Kupfer-Eisensulfid (CuFeS₂) bekannt ist, wurde beobachtet.
5) Die rein katalytische Beschleunigung der Fällung von Nickel- und Zinksulfiden in Gegenwart von Eisensulfid.
6) Die Eisen-II-Ionen verdrängen im sauren Bereich Nickelionen quantitativ aus den meisten Komplexverbindungen.

Die Entfernung von Chrom-VI-Ionen aus wässrigen Systemen erfolgt klassisch durch Reduktion mit Bisulfitlauge (NaHSO₃-Lösung) zu Chrom-III mit anschließender Fällung durch Neutralisation im pH Bereich von 7,5 bis 8,5.

Bei Verwendung der Zusammensetzung in den vorgestellten Stufen-, Simultan-, oder Kollektorfällungverfahren werden die Chrom-VI-Ionen durch die in der Zusammensetzung enthaltenen Polysulfane reduziert. Dabei beträgt der Reduktionsmittelbedarf aus der Zusammensetzung nur 1/4 des Bedarfs an Sulfitschwefel aus der Bisulfitlauge, da das Sulfid 8 Oxidationseinheiten bis zum Sulfat aufnimmt, das Sulfit dagegen nur 2. Außerdem ist neben der Vermeidung der unangenehmen SO₂-Emission die Aufsalzung des Mediums durch die Reduktion erheblich geringer. Das Chrom-III wird dann im Verlauf der genannten Verwendungsmöglichkeiten der Zusammensetzung als schwerlösliches Cr(OH)₃ bei einem pH Wert im Bereich von 8,0 bis 10, vorzugsweise von 8,3 bis 9,6 mit ausgefällt. Die Chromrestgehalte lagen für Chrom-III bei Verwendung der Zusammensetzungen und der erfindungsgemäßen Verwendungen der Zusammensetzung ausnahmslos unter 0,1 mg/l im Wasserkörper. Die Chrom-VI-Gehalte lagen hier beiunter 0,01 mg/l und waren selbst mit feinsten Meßmethoden nicht mehr nachweisbar.

Die bei Verwendung der Zusammensetzung anfallenden Schwer-und Buntmetallsulfide lassen sich in üblicher Weise durch Sedimentation abscheiden. Anders als der in herkömmlichen Abwasserreinigungsanlagen der Metallbearbeitung und Galvanik entstehende Hydroxidschlamm, der bei Kalkfällung verfahrensbedingt große Überschußmengen an Kalzium sowie Gehalte an Phosphat und Fluorid aufweist, können die Sulfide nach Neutralisation mit Natronlauge nach einer Entwässerung abgeröstet und direkt in den normalen Metallverhüttungsprozeß zur Rückgewinnung der Metalle eingeschleust werden. Sie stellen wertvolle, leicht verwertbare Metallkonzentrate dar. Damit ist prinzipiell die vollständige Rückgewinnung der Metalle leicht möglich. Dies ist besonders dann von Interesse, wenn separierte Schwermetallabwässer mit einheitlicher Zusammensetzung aufzuarbeiten sind und somit praktisch reine Metallsulfide (neben Schwefel, der die Aufbereitung jedoch nicht stört) anfallen.

Auch die Abtrennung der weniger wertvollen Eisen- und Zinksulfide von Kupfer- und Nickelsulfid kann in einfacher Weise durch eine Säurebehandlung bei gleichzeitiger Rückführung des entstehenden Schwefelwasserstoffs erfolgen. Damit beinhaltet diese Verwendung der Zusammensetzung neben einer hohen Betriebssicherheit bei einfachster Durchführung auch weitgehend die vom Gesetzgeber geforderte Möglichkeit zur günstigen Rückgewinnung der Wertstoffe nach dem Gesetz über die Vermeidung und Entsorgung von Abfällen.

### Herstellungsbeispiel 1

In einem Behälter mit einem Fassungsvermögen von mindestens 1,2 m³ werden 500 l Wasser (27,75 kmol) eingefüllt. Anschließend setzt man 290 kg Schwefel, welcher einen Kieselsäurezusatz enthält (Ärosil; 9,044 kmol), unter Rühren langsam zu. Es wird dann 10 Minuten weitergerührt, um anschließend 200 kg (5 kmol) Natriumhydroxid in Schuppenform unter intensivem Weiterrühren zuzugeben. Nach 6 Minuten wird durch die exotherme Hydratisierung des Natriumhydroxids die zur Reaktion mit dem Schwefel erforderliche Initialtemperatur von 62°C erreicht. Nach 25 Minuten Rühren hat sich der Schwefel vollständig gelöst. Nach vollständiger Lösung des Schwefels wird der erhaltenen Zusammensetzung 20 g Aluminiumsulfat pro l Zusammensetzung zugesetzt. an erhält die erfindungsgemäße Zusammensetzung in Form einer dunkelgelben bis tiefroten Flüssigkeit, die nach einer mehrstündigen Abkühlzeit unter Weiterrühren nahezu geruchlos ist. Die Schwefelgruppierungverteilung des in dieser erfindungsgemäßen Zusammensetzung enthaltenen Schwefels ist wie folgt:
1. Polysulfidanteile:

   19 % S₂²⁻, 6 % S₃²⁻, 18 % S₄²⁻, 5 % S₅²⁻

   15 % S₆²⁻, 12 % S₈²⁻
2. Polsulfan-monosulfonate in % Schwefel:

   13 % S₂O₃²⁻ (Thiosulfat)

   8 % S₄O₃²⁻
3. Polysulfan-disulfonate in % Schwefel:

   3 % S₄O₆²⁻ (Tetrathionat)
4. Elementarer gelöster Schwefel:

   1 % S₆- und S₈-Ringschwefel

Die so erhaltene, Zusammensetzung weist folgende Eigenschaften auf.

Form: Flüssigkeit Farbe: rot-orange Geruch: schwach thioähnlich

| | |
|---|---|
| Dichte bei 20°C | 1,399 g/cm³ |
| Dampfdruck bei 20°C | 16,4 mbar |
| Viskosität bei 20°C | 6,94 mm²/s |
| n. DIN 51 562 | = 9,70 m Pa s (c P) |
| Siedepunkt bei 1013 mbar | 109,7°C |
| Kristallisationspunkt | - 21,8 °C |
| Löslichkeit in Wasser | unbegrenzt |
| pH-Wert (10 g/l) | 12,5 |

### Herstellungsbeispiel 2

In einen Behälter mit einem Fassungvermögen von mindestens 1,2 m³ werden 500 l Wasser (27,75 kmol) eingefüllt. Anschließend gibt man 290 kg eines einen Kieselsäurezusatz enthaltenden Schwefels (Ärosilschwefel; 9,044 kmol) unter Rühren langsam in das Reaktionsgefäß. Anschließend rührt man 10 Minuten, um danach zügig 280,50 kg (5 kmol) Kaliumhydroxid unter intensivem Weiterrühren zuzugeben. Nach 7 Minuten wird durch die exotherme Hydratisierung des Ätzkalis die zur Reaktion mit dem Schwefel erforderliche Initialtemperatur von 62°C erreicht. Nach 25 Minuten ist der eingesetzte Schwefel vollständig aufgelöst. Die Zusammensetzung fällt als tiefrote Flüssigkeit, die nach einer mehrstündigen Abkühlzeit unter Weiterrühren fast geruchlos ist, an. Die Zusammensetzung des in der Zusammensetzung enthaltenen Schwefels entspricht der zuvor angeführten Schwefelgruppierungsverteilung.

## Patentansprüche

1. Verfahren zur Herstellung einer Zusammensetzung zum Behandeln von verunreinigtem Wasser aufweisend
Polysulfidanteile S₂²⁻, S₃²⁻, S₄²⁻, S₅²⁻, S₆²⁻, S₈²⁻,
Polysulfan-monosulfonate S₂O₃²⁻ und S₄O₃²⁻,
Polysulfan-disulfonate S₄O₆²⁻ und elementaren Schwefel S₆- und S₈-Ringschwefel
**dadurch gekennzeichnet,**
daß man Schwefel mit einem Zusatz zur Verhinderung von Verbackungen unter Rühren in Wasser aufschlämmt und anschließend Alkalihydroxid zusetzt, wobei die Temperatur unterhalb des Siedepunktes bleibt, wobei Wasser, Schwefel und Alkalihydroxid im Molverhältnis von 5,4-5,6-1,7-1,9 : 1 umgesetzt werden.

2. Verfahren nach Anspruch 1, **dadurch gekennzeichnet,** daß der Zusatz Kieselsäure enthält.

3. Verfahren nach Anspruch 1 oder 3, **dadurch gekennzeichnet,** daß man der Zusammensetzung ein Aluminiumsalz zusetzt.

4. Verwendung der gemäß Anspruch 1 hergestellten Zusammensetzung zur Behandlung von Metallionen und ggf. organische und/oder anorganische Verunreinigungen enthaltendem Wasser.

5. Verwendung nach Anspruch 4, dadurch gekennzeichnet, daß das verunreinigte Wasser vor Zugabe der Zusammensetzung mit Mineralsäure auf pH 2,5-5,5 eingestellt wird.

6. Verwendung nach Anspruch 4 oder 5, dadurch gekennzeichnet, daß die Behandlung des verunreinigten Wassers in einem pH-fraktionierten Stufenfällverfahren, Simultanfällverfahren oder Kollektorfällverfahren durchgeführt wird.

## Claims

1. Production method of a composition for the treatment of contaminated water comprising
polysulfide portions S₂²⁻, S₃²⁻, S₄²⁻, S₅²⁻, S₆²⁻, S₈²⁻,
polysulfane-monosulfonates S₂O₃²⁻ et S₄O₃²⁻,
polysulfane-disulfonates S₄O₆²⁻ and elementary sulfur S₆ and S₈ ring sulfur,
characterized in that
sulfur is suspended with an additive in water by stirring in order to prevent clogging and then alkalihydroxide is added, the temperature remaining beneath the boiling point, water, sulfur and alaklihydroxide being reacted in a molar ratio of 5.4-5.6 : 1.7-1.9 : 1.

2. Method according to claim 1, characterized in that the additive contains silicic acid.

3. Method according to claim 1 or 3, characterized in that an aluminium salt is added to the composition.

4. Application of the composition produced according to claim 1 for the treatment of water containing metal ions and, should the occasion arise, organic and/or inorganic contaminations.

5. Application according to claim 4, characterized in that the contaminated water is set at a pH value of 2.5-5.5 with mineral acid before adding the composition.

6. Application according to claim 4 or 5, characterized in that the treatment of the contaminated water is effected in a pH fractional stepwise precipitation process, simultaneous precipitation process or collector precipitation process.

## Revendications

1. Procédé de production d'une composition pour traiter des eaux contaminées comprenant
des fractions de polysulfure S₂²⁻, S₃²⁻, S₄²⁻_{,} S₅²⁻, S₆²⁻, S₈²⁻
des polysulfane-monosulfonates S₂O₃²⁻ et S₄O₃²⁻_{,}
des polysulfane-disulfonates S₄O₆²⁻ et du soufre élémentaire du soufre cyclique de S₆ et S₈
caractérisé en ce que
du soufre est mis en suspension avec un additif dans l'eau en agitant pour prévenir la formation des matons et ensuite un hydroxide alcalin est ajouté, la température restant au-dessous du point d'ébullition, l'eau, le soufre et l'hydroxide alcalin réagissant dans un rapport molaire de 5,4-5,6 : 1,7-1,9 : 1.

2. Procédé selon la revendication 1, caractérisé en ce que l'additif contient de l'acide silicique.

3. Procédé selon la revendication 1 ou 3, caractérisé en ce qu'on ajoute un sel d'aluminium à la composition.

4. Utilisation de la composition produite selon la revendication 1 pour traiter des eaux contenant des ions métalliques et, à l'occasion, des contaminations organiques et/ou inorganiques.

5. Utilisation selon la revendication 4, caractérisée en ce que l'eau contaminée est mise à une valeur de pH de 2,5 - 5,5 avec de l'acide minéral avant d'ajouter la composition.

6. Utilisation selon la revendication 4 ou 5, caractérisée en ce que le traitement de l'eau contaminée est effectué dans un procédé de précipitation étagé, un procédé de précipitaion simultané ou un procédé de précipitation de collecteur fractionnés en pH.
